# EUROPEAN PATENT APPLICATION

(11) **EP 2 056 556 A1**
(43) Date of publication of application: **06.05.2009**
(21) Application number: 07800783.8
(22) Date of filing: 24.08.2007
(51) Int. Cl.: H04L 29/06

(54) **AN INTERCOMMUNICATION METHOD AND A COMMUNICATION SYSTEM BETWEEN DIFFERENT NETWORKS**

(30) Priority: 25.08.2006 CN 200610109946
(71) Applicant: Huawei Technologies Co., Ltd., Longgang District, Shenzhen Guangdong 518129 (CN)
(72) Inventor: SHI, Youzhu, Shenzhen Guangdong 518129 (CN)
(74) Representative: Gulde Hengelhaupt Ziebig & Schneider
(86) International application number: PCT/CN2007/002564
(87) International publication number: WO 2008/025257

(57) **Abstract**

A method for interconnecting networks is provided. The method includes: transmitting a communication command containing a service ID of a first network side to a first network side; finding out, by the first network side, a service ID of a second network side associated with the service ID of the first network side according to the association between the service ID of the first network side and the service ID of the second network side; and transmitting the communication command containing the service ID of the second network side to the second network side. As a result of the foregoing technical solution, the call, directing to service IDs, between the IMS network and the heterogeneous network as well as between the IMS networks provided by different operators becomes possible; thereby the interconnection between services can be accomplished. Furthermore, an apparatus and a communication system for interconnecting different networks are disclosed.

## Description

### FIELD OF THE INVENTION

The present invention relates to data transmission technology in communication field, more specifically, to methods and communication systems thereof for interconnection between different networks.

### BACKGROUND

Internet Protocol Multimedia subsystem (IMS), defined by 3^{rd} Generation Partnership Project (3GPP), is a target network which is used in voice packet and data packet for the 3^{rd} Generation mobile network and is used to provide unified multimedia services and applications.

The IMS employs an IP packet domain as a bearer channel for controlling signaling and media transmission. The IMS employs a session initiation protocol (SIP) as call control signaling so as to separate the service management, session control and bearer access.

The SIP protocol is an application-layer control protocol for creating, modifying and terminating multimedia sessions or calls. These multimedia sessions include multimedia conferences, tele-education, internet call, etc. Its core is defined by Internet Engineering Task Force (IETF) standard organization. However, for different networks and applications, it may have different set specifications, e.g., IMS set SIP protocol which is defined by IMS, and SIP-I protocol which is defined by International Telecommunication Union - Telecommunication Standardization Sector (ITU-T) and which may be used to package Integrated Service Digital Network User Part (ISUP), etc.

Currently, other international standardization organizations, such as International Telecommunication Union - Telecommunication Standardization Sector (ITU-T), European Telecommunications Standards Institute (ETSI), etc., may also employ IMS as its defined core network.

With the development of network technologies and prevalence of the network, there are more and more extensive applications of interconnecting different networks. The IMS interconnection generally refers to communication between the IMS network and heterogeneous network, and between IMS networks of different operators. The heterogeneous network includes traditional circuit network and other IP-based multimedia networks, i.e., IP-based non-IMS multimedia networks. The former may be the Public Switched Telephone Network (PSTN), Integrated Services Digital Network (ISDN), Public Land Mobile Network (PLMN), etc., wherein a Media Gateway Control Function (MGCF) is employed between the IMS and traditional circuit domain networks. The latter may be an audio-visual and multimedia system, etc., wherein an Interconnection Border Control Function (IBCF) is employed between the IMS and other IP-based multimedia networks. The IMS networks of different operators may use Interrogating Call Session Control Function (I-CSCF) and IBCF for interconnection.

According to the present invention, different networks refer to networks having different service ID protocols in the IMS networks provided by different operators and the heterogeneous networks.

When the current IMS network interconnects with a heterogeneous network or the IMS networks provided by different operators interconnect with each other, if the called number is not a user ID, but a service ID, the information of the call initiated by the user may need to be confirmed at two sides of the network. However, since the call information protocol for the two sides of the network might be different, or the ID for the same service defined by different operators might be different, the call directing to the service ID might be unable to accomplish. Therefore, it is necessary to convert the service ID between two sides of the network so that the call for the service ID between two sides of the network can be accomplished. However, no prior art teaches the implementation of service ID conversion between IMS network and heterogeneous network or between IMS networks provided by different operators. As a result, calls directing to service ID may be unable to accomplish during IMS interconnection, and the interconnection and interaction between the IMS network and the heterogeneous network, as well as between different IMS networks may not be achieved. Accordingly, the idea of interconnection cannot be realized commercially.

### SUMMARY

The purpose of the embodiments of the present invention is to provide a method for interconnection between different networks and communication system thereof so as to solve the problem existing in the prior art that communication service regarding the service ID cannot be implemented during IMS interconnection.

An apparatus for interconnecting different networks is provided according to an embodiment of the present invention. The apparatus can be used between the transmitting side and the receiving side. The apparatus includes:
a service ID conversion unit, configured to receive a communication command transmitted from the transmitting side, obtain a service ID of the receiving side associated with a service ID of the transmitting side according to the association between the service ID of the transmitting side and the service ID of the receiving side wherein the communication command transmitted from the transmitting side includes the service ID of the transmitting side, and transmit the communication command containing the service ID of the receiving side to the receiving side.

A method for interconnecting different networks is provided according to an embodiment of the present invention. The method includes:
receiving, by a first network side, a communication command containing a service ID of the first network side;
finding out a service ID of a second network side associated with the service ID of the first network side according to association between the service ID of the first network side and the second service ID of the second network side; and
transmitting the communication command containing the service ID of the second network side to the second network side.

A communication system is provided according to an embodiment of the present invention. The system includes a first network side and a second network side. The system further includes one or more network interconnection apparatuses wherein the first network side is coupled to the second network side via one or more network interconnection apparatuses.

Specifically, each network interconnection apparatus is configured to receive a communication command from a previous node apparatus, convert an service ID of the transmitting side into a service ID of the receiving side according to the acquired association between the service ID of the transmitting side and the service ID of the receiving side, and then transmit the communication command with the converted service ID to a next network interconnection apparatus coupled to the network interconnection apparatus, and the process continues until the communication command is transmitted to the second network side.

According to embodiments of the present invention, interconnection between networks is implemented by converting service IDs of the two sides of the network. Consequently, communication services regarding service ID can be implemented. For instance, the interconnection between call services, subscription/notification services, message services, etc., can be implemented. Users may have a unified service experience in different networks. The continuity and consistency of the service are enhanced so that the user satisfaction is improved. In addition, with respect to the networks, according to the embodiments of the present invention, the IMS network may better heritage the services of the traditional circuit network and pave the way for the evolution from the traditional circuit network to the IMS network.

### BRIEF DESCRIPTION OF THE DRAWINGS

Figure 1 is a block diagram of communication system according to an embodiment of the present invention;

Figure 2 is a block diagram of a network interconnection apparatus according to an embodiment of the present invention;

Figure 3 is another block diagram of a network interconnection apparatus according to an embodiment of the present invention;

Figure 4 is flowchart of a method for implementing interconnection between different networks according to a first embodiment of the present invention;

Figure 5 is a flowchart of a method for interconnecting from the IP multimedia subsystem (IMS) network to the conventional circuit network according to a second embodiment of the present invention;

Figure 6 is a flowchart of a method for implementing interconnection using two network interconnection apparatuses according to a third embodiment of the present invention;

Figure 7 is a flowchart of a method for implementing interconnection using two network interconnection apparatuses according to a fourth embodiment of the present invention;

Figure 8 is a flowchart of a method for interconnecting the different conventional circuits network to the IP multimedia subsystem (IMS) network according to a fifth embodiment of the present invention;

Figure 9 is a flowchart of a method for interconnecting the IP multimedia subsystem (IMS) network to the conventional circuit network according to a sixth embodiment of the present invention; and

Figure 10 is a flowchart of a method for interconnecting the IP multimedia subsystem (IMS) network A to the IP multimedia subsystem (IMS) network B according to a seventh embodiment of the present invention.

### DETAILED DESCRIPTION

According to embodiments of the present invention, interconnection between networks is implemented by converting service ID of two sides of the network. Consequently, for communication services with respect to service ID, such as call service, subscription/notification service, message service, etc., service interconnection can be implemented.

Illustrations are made to embodiments of the present invention in connection with the accompanying drawings.

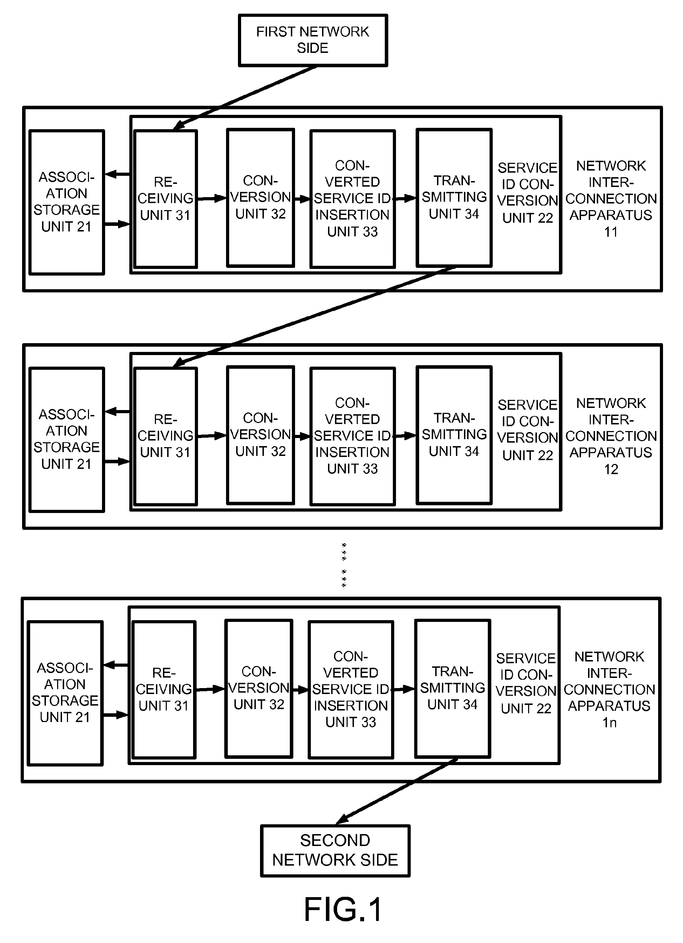

As illustrated in Figure 1, a communication system according to an embodiment of the present invention includes a first network side and a second network side. The system further includes one or more network interconnection apparatuses wherein the first network side is coupled to the second network side via one or more network interconnection apparatuses.

The network interconnection apparatus includes: an association storage unit 21 and a service ID conversion unit 22.

The association storage unit 21 is configured to store and provide the association between transmitting side service ID and the receiving side service ID for the service ID conversion unit 22.

The service ID conversion unit 22 is configured to look up the association storage unit 21 for a corresponding service ID of the receiving side associated with the service ID of the transmitting side after obtaining a communication command sent by the transmitting side. The service ID conversion unit 22 is further configured to insert the service ID of the receiving side to the communication command and send the communication command to the receiving side.

The service ID conversion unit 22 further includes: a receiving unit 31, a conversion unit 32, a converted service ID insertion unit 33 and a transmitting unit 34.

The receiving unit 31 is configured to receive the communication command of transmitting side which contains the service ID of the transmitting side.

The conversion unit 32 is configured to look up the association between the service ID of the transmitting side and the service ID of the receiving side to find out the service ID of the receiving side associated with the service ID of the transmitting side contained in the communication command.

The converted service ID insertion unit 33 is configured to insert the service ID of the receiving side into the communication command. The transmitting unit 34 is configured to transmit the communication command, containing the service ID of receiving side, to the receiving side.

The association storage unit 21 may contain several storage entities, such as network node entity, network server entity, network hard disc or network driver, etc. The association between the service ID of the transmitting side and the service ID of the receiving side may be stored in these storage entities in an arbitrary order, or may be stored in accordance with a particular requirement. For instance, if it is intended to accelerate the processing speed when initiating an emergency call, all the emergency service IDs may be stored in a specific storage entity. After the service ID conversion unit obtains the emergency service ID of the transmitting side, the service ID conversion unit searches the specific storage entity directly so that the lookup efficiency for the emergency service is enhanced.

When the communication system includes only one network interconnection apparatus, the first network side serves as the transmitting side of the network interconnection apparatus and the second network side serves as the receiving side of the network interconnection apparatus. When the communication system includes two or more network interconnection apparatuses, after each network interconnection apparatus receives a request for communication service from previous node device, it converts the service ID of the transmitting side in the request for communication service into a service ID of the receiving side according to association between service ID of the transmitting side and the service ID of the receiving side. Then, the request for communication service containing the converted service ID may be transmitted to the next network interconnection apparatus adjacent thereto. The process continues until the request for communication service arrives at the second network side.

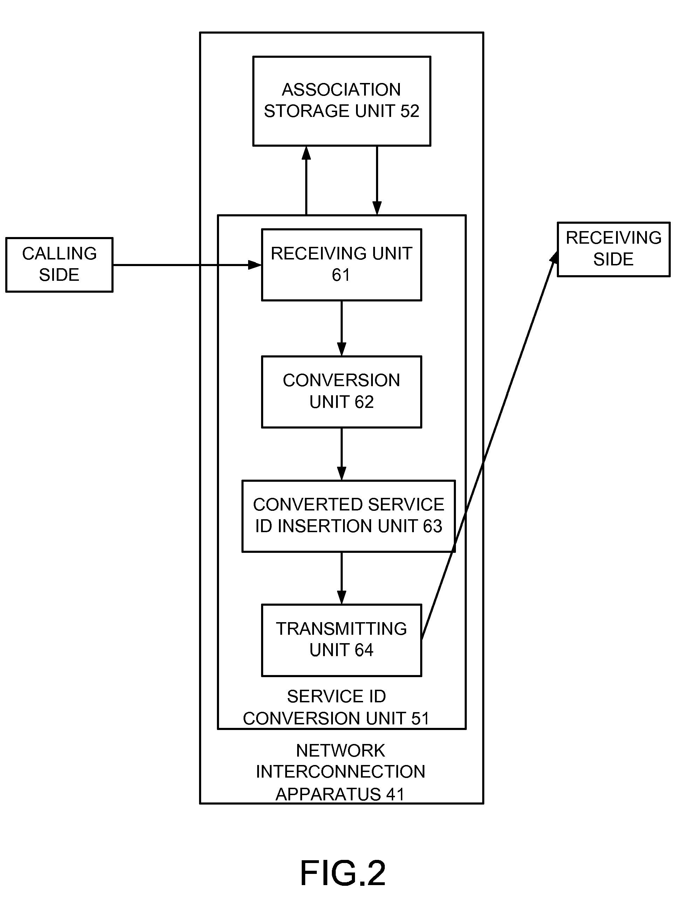

As illustrated in Figure 2, after the network interconnection apparatus 41 obtains the communication command sent from the transmitting side, the apparatus 41 obtains the service ID of the receiving side which is associated with the service ID of the transmitting side contained in the communication command, and then forwards the communication command containing the service ID of the receiving side to the receiving side.

The network interconnection apparatus 41 includes a service ID conversion unit 51 and an association storage unit 52.

The service ID conversion unit 51 is configured to acquire the service ID of the receiving side which is associated with the service ID of the transmitting side contained in the communication command after obtaining the communication command sent from the transmitting side. Then, the service ID conversion unit 51 forwards the communication command, containing the service ID of the receiving side, to the receiving side.

The association storage unit 52 is configured to store and provide the association between the service ID of the transmitting side and the service ID of the receiving side for the service ID conversion unit 51.

The service ID conversion unit 51 includes: a receiving unit 61, conversion unit 62, converted service ID insertion unit 63 and a transmitting unit 64.

The receiving unit 61 is configured to receive the communication command of transmitting side, which contains the service ID of the transmitting side.

The conversion unit 62 is configured to look up the association between the service ID of the transmitting side and the receiving side to find out the service ID of the receiving side associated with the service ID of the transmitting side contained in the communication command,.

The converted service ID insertion unit 63 is configured to insert the service ID of the receiving side into the communication command.

The transmitting unit 64 is configured to transmit the communication command, containing the service ID of receiving side, to the receiving side.

When the transmitting side of the network interconnection apparatus 41 is IMS network, its receiving side is an IP multimedia subsystem network or a heterogeneous network or an external network interconnection apparatus. When the transmitting side is a heterogeneous network, its receiving side is IMS network or heterogeneous network or an interconnection apparatus for an external network. When the transmitting side is an interconnection apparatus for an external network, its receiving side is IMS network or heterogeneous network or an interconnection apparatus for an external network. Here, the interconnection apparatus for the external network may be the network interconnection apparatus 41 according to an embodiment of the present invention, or may be an apparatus in the other network which implements the network interconnection.

According to an embodiment of the present invention, the network interconnection apparatus 41 may be located in a service control unit, a call session control unit (CSCF), MGCF, IBCF or interworking function (IWF) element.

The service control unit implements the service control regarding the IMS network. It may implement service processing function, such as Application Server (AS), or may implement service trigger function, i.e., trigger the service to be processed in the application server, such as service broker.

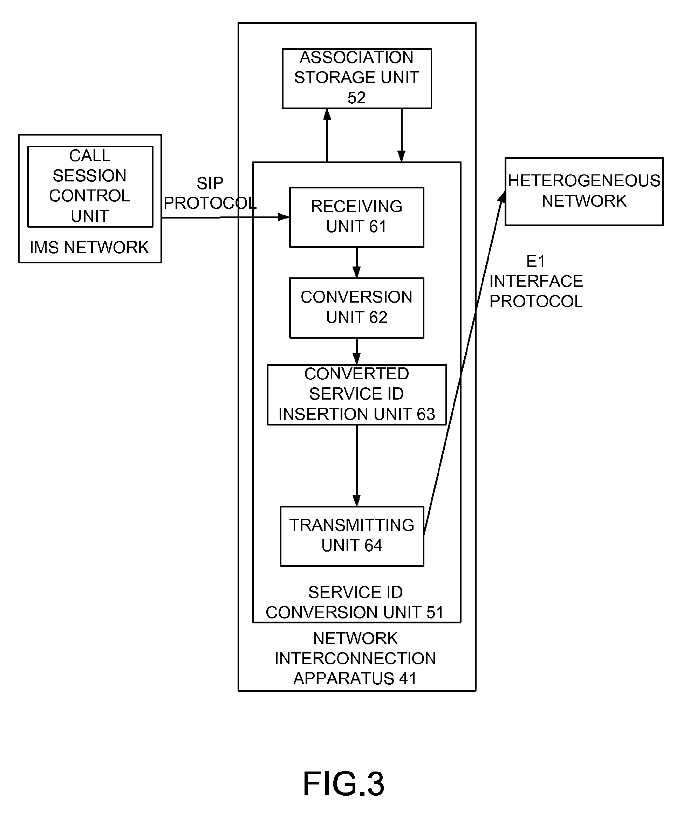

Figure 3 is an example of the interconnection between IMS network and heterogeneous network, illustrating the structure of the network interconnection apparatus according to an embodiment of the present invention.

As illustrated in Figure 3, the IMS network is a transmitting side and the heterogeneous network is a receiving side. The call session control unit is the core element in the IMS network. The call session control unit implements functionalities, such as session control, registration service, etc. The call session control unit in the IMS network and the receiving unit 61 are connected by SIP protocol. The transmitting unit 64 and the heterogeneous network are connected via E1 interface. The transmitting unit 64 may connect to the heterogeneous network via other network interconnection apparatus. The transmitting unit 64 may connect to the other network interconnection apparatus via E2 interface. The network interconnection apparatus 41 may translate the signaling between SIP protocol and the E1/E2 interface protocol, and may implement the service ID conversion between different ID formats supported by the SIP protocol and the E1/E2 interface protocol, respectively.

When the heterogeneous network is a traditional circuit domain network, the network interconnection apparatus 41 may be located on the MGCF and the E1 interface protocol is traditional inter-office signaling in circuit domain such as ISDN user part signaling. When the heterogeneous network is other IP-based multimedia networks, the network interconnection apparatus 41 may be located in the IBCF, IWF. Apart from IMS set, the E1 interface protocol may be packet signaling, such as an SIP protocol, an H. 323 protocol.

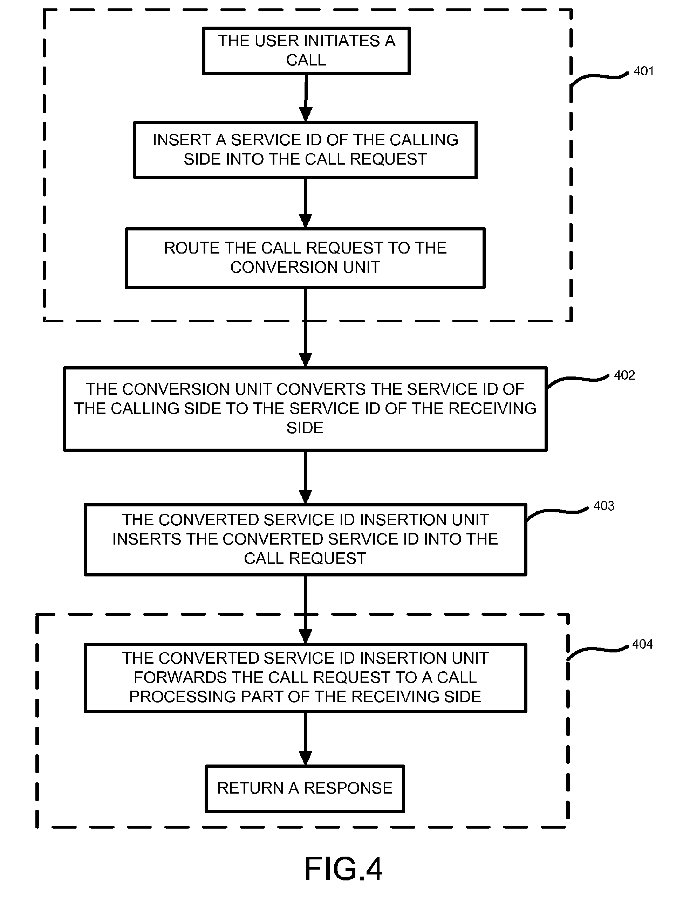

Figure 4 in connection with Figure 1 illustrates a flowchart of a method for interconnecting different networks according to an embodiment of the present invention where the communication system includes only one network interconnection apparatus. The method mainly includes the following steps.

Step 401: The user initiates a communication service, inserts a service ID of the transmitting side into the communication command, and routes this communication command to the conversion unit 32.

At this step, a user terminal or a user may execute the task of inserting the service ID of the transmitting side into the communication command. When the transmitting side is an IMS network, a call session control unit may execute the task of inserting the service ID of the transmitting side into the communication command.

The way to insert the service ID into the communication command is described below. If the transmitting side is an IMS network, the service ID is inserted into a unified request resource identifier (RequestURI) header of the session invitation message (SIP INVITE message) according to the IETF definition. The service ID of the IMS network may not only be stored in the SIP INVITE message, but may also be stored in the other SIP message, such as command acknowledge message (ACK), information message (MESSAGE), response message, etc. The service ID may not only be stored in the RequestURI header of the SIP message, but may also be stored in the other header or body of the SIP message. If the transmitting side is a heterogeneous network, the service ID may be inserted into the called user ID regarding the Signaling System #7 (SS7). The service ID of the heterogeneous network may be stored in the other parameters of the SS7 signaling, or may be stored in the other protocols, such as H. 323 protocol.

The service ID may include an emergency service ID, such as a fire alarm, a bandit alarm, a first-aid service, the called-party-charged service ID, card number service ID, charging notification service ID, reverse charging service ID, session service ID and message service ID, etc. The message service refers to services such as instant message, short message, etc.

When the user initiates a communication service, the request message already includes the address information of the called party. When the transmitting side is an IMS network, the call session control unit in the IMS network may determine which network can handle this call by virtue of the address information of the called party. For instance, if the address of the called party belongs to the current network, no further network interconnection is needed. If the address of the called party belongs to the other IMS network or heterogeneous network, the call session control unit may route the request message and the subsequent communication commands to the receiving unit 31 and then forwards to the conversion unit 32. When the transmitting side is a heterogeneous network, the heterogeneous network itself may determine which network to handle the communication service by virtue of the address information of the called party. When the address of the called party is within the other network, the heterogeneous network may route the communication command to the receiving unit 31 and then forwards the command to the conversion unit 32.

Step 402: The conversion unit 32 converts the service ID of the transmitting side into the service ID of the receiving side.

In this embodiment, the conversion is implemented according to the following method. After the conversion unit 32 receives the service ID of the transmitting side, the conversion unit 32 then searches the association storage unit 21. For instance, when the emergency service ID of the IMS network side is URN:sos.firstaid, the corresponding telephone number for such service ID in the Chinese traditional circuit network is 120. When the conversion unit 32 receives the service ID of the transmitting side, i.e., URN:sos.firstaid, the corresponding service ID 120 of the receiving side is obtained by looking up the association. In this way, the conversion of the service ID of the transmitting side and the receiving side has been completed.

Step 403: The converted service ID insertion unit 33 inserts the converted service ID into the communication command.

The way that the converted service ID insertion unit 33 inserts the converted service ID into the communication command is as follows: If the converted service ID is a service ID of a heterogeneous network, the service ID can be inserted into the called user ID regarding the SS7 signaling. The service ID may be stored in the other parameters of the SS7 signaling, or may be stored in the other protocols, such as H. 323 protocol. If the converted service ID is a service ID of IMS, the service ID can be inserted into a RequestURI header in an SIP INVITE message in compliance with the IETF definition. The service ID of the IMS network may not only be stored in the SIP INVITE message, but may also be stored in the other SIP messages, such as command acknowledge message (ACK), information message (MESSAGE), response message, etc. The service ID may not only be stored in the RequestURI header of the SIP message, but may also be stored in the other header or body of the SIP message.

Step 404: The transmitting unit 34 forwards the converted communication command to a corresponding service processing part of the receiving side. Meanwhile, the receiving side returns a response message to the communication command, and transmits the response message to the user of the transmitting side in a reverse routing order by network interconnection apparatus.

Embodiments are presented herein for illustration of the method for implementing network interconnection according to the present invention.

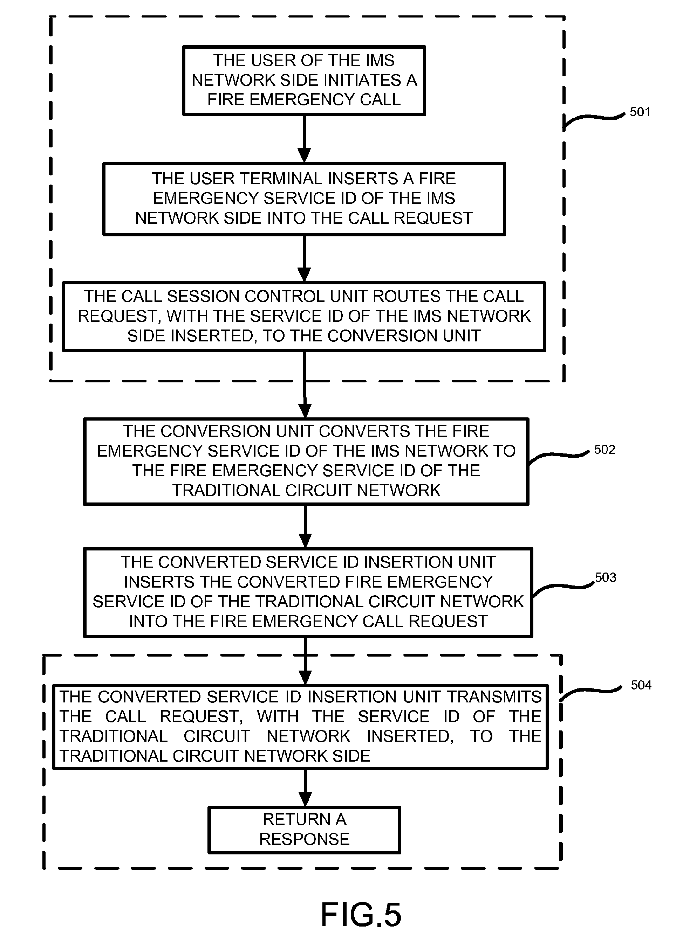

As illustrated in Figure 5, embodiment 2 describes a scenario where the communication system includes only one network interconnection apparatus, the IMS network serves the transmitting side and the traditional circuit network serves as the receiving side, the user in the IMS network initiates a fire alarm call, and the Public Safety Access Point (PSAP) is located in the traditional circuit network. In this case, the interconnection of the two sides of the network is described below.

Step 501: When the user of the IMS network side initiates the fire emergency call, the user terminal inserts a fire emergency service ID into the communication command after detecting the fire emergency call. Inserting the fire emergency service ID is done by inserting URN:sos.fire into the RequestURI header of the SIP INVITE message according to the IETF definition, indicating that an emergency call has been initiated and the emergency type is fire alarm.

The user terminal transmits the fire emergency call, with a fire emergency service ID inserted, to the call session control unit. The call session control unit determines that the emergency call needs to be handled by the PSAP in the traditional circuit network as a result of the address information of the called party in the request message. Then, the call session control unit routes the fire emergency communication command to the receiving unit 31 and subsequently forwards the command to the conversion unit 32.

Step 502: After receiving the fire emergency communication command, the conversion unit 32 converts the fire emergency service ID for the IMS network into the fire emergency service ID for the traditional circuit network. The conversion is done by the conversion unit 32 through obtaining the association between the service ID of the IMS network and the service ID of the heterogeneous network from the association storage unit 21, and then finding out the service ID of the heterogeneous network associated with the service ID of the IMS network according to the association.

According to this embodiment, for instance, the fire emergency service ID is telephone number 119 for the traditional circuit network. The conversion unit 32 needs to convert the emergency service ID URN:sos.fire in the emergency communication command to the emergency service ID 119 for the traditional circuit network. In other words, the conversion unit 32 finds out the service ID of the traditional circuit network, i.e., 119, corresponding to the service ID of the IMS network, i.e., URN:sos.fire, according to the stored association of service IDs. In this way, the conversion for the service IDs of the transmitting side and the receiving side has been completed.

Step 503: The converted service ID insertion unit 33 inserts the converted service ID into the communication command.

The insertion is done by inserting 119 into the called user ID regarding the SS7 signaling, and then the transmitting unit 34 transmits the communication command with the converted service ID inserted, to the PSAP in the traditional circuit network.

Step 504: When the PSAP receives the above communication command, it identifies that this is an emergency call with the type of fire alarm, and then handles the emergency call accordingly. Meanwhile, a response message to the communication command has to be returned to the user of the transmitting side so as to carry out the interconnection between the IMS network of the transmitting side and the traditional circuit network of the receiving side.

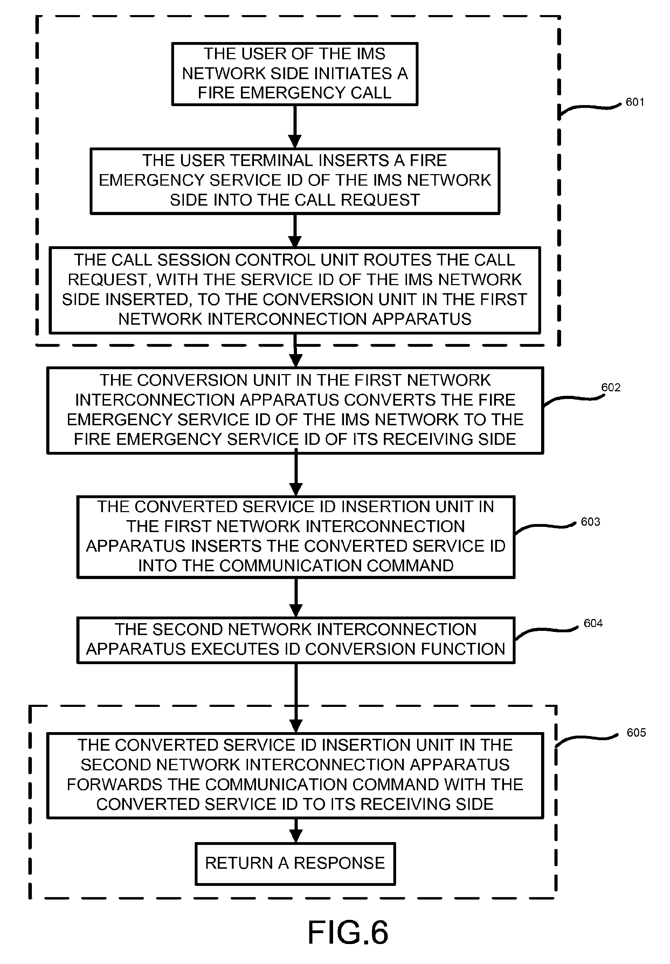

As illustrated in Figure 6, embodiment 3 describes a scenario where the communication system includes two network interconnection apparatuses, the IMS network serves as the transmitting side, the traditional circuit network serves as the receiving side, the user in the IMS network initiates a fire alarm call, and the Public Safety Access Point (PSAP) is located in the traditional circuit network. In this case, the interconnection of the two sides of the network using two network interconnection apparatuses is described below.

Step 601: When the user of the IMS network side initiates the fire emergency call, the user terminal inserts a fire emergency service ID into the communication command after detecting the fire emergency call. Inserting the fire emergency service ID may be done by inserting URN:sos.fire into the RequestURI header of the SIP INVITE message according to the IETF definition, indicating that an emergency call has been initiated and the emergency type is fire alarm.

The user terminal transmits the fire emergency call, with a fire emergency service ID inserted, to the call session control unit. The call session control unit determines that the emergency call needs to be handled by the PSAP in the traditional circuit network according to the address information of the called party in the request message. Then, the call session control unit routes the fire emergency communication command to a receiving unit in a first network interconnection apparatus and subsequently forwards the command to the conversion unit.

Step 602: After receiving the fire emergency communication command, the conversion unit in the first network interconnection apparatus converts the fire emergency service ID for the IMS network into the fire emergency service ID for its receiving side. The conversion is done by the conversion unit in the first network interconnection apparatus through obtaining the association between the service ID of the IMS network and the service ID of its receiving side from an association storage entity, and then finding out the service ID of its receiving side associated with the acquired service ID of the IMS network according to the association.

According to the embodiment, in the packet circuit network, the priority header for the fire emergency service ID is set as "emergency." The conversion unit in the first network interconnection apparatus converts the emergency service ID URN: sos. fire in the emergency call request to the emergency service ID of the receiving side. For instance, the priority header is set as "emergency."

Step 603: A converted service ID insertion unit in the first network interconnection apparatus inserts the converted service ID into the communication command.

The insertion is done by inserting emergency service ID "emergency" into the priority header of the SIP INVITE message, and then the transmitting unit transmits the communication command with the converted service ID inserted, to a second network interconnection apparatus.

Step 604: The second network interconnection apparatus executes ID conversion function.

The second network interconnection apparatus converts the emergency service ID "emergency" inserted in the priority header of the SIP INVITE message to an emergency service ID of the traditional circuit network. According to the embodiment, the fire emergency service ID is telephone number 119 for the Chinese traditional circuit network. A conversion unit in the second network interconnection apparatus obtains an association between the "emergency" and the service ID of the traditional circuit network, finds out the service ID 119 of the receiving side, and inserts the 119 into the called user ID regarding the SS7 signaling. Then, the transmitting unit forwards the communication command with the converted service ID to the PSAP in the traditional circuit network.

The second network interconnection apparatus may also adopt other solutions to implement the service ID conversion.

Step 605: When the PSAP receives the above communication command, it identifies that this is an emergency call with the type of fire alarm, and then handles the emergency call accordingly. Meanwhile, a response message has to be returned to the user of the transmitting side so as to implement the interconnection between the IMS network of the transmitting side and the traditional circuit network of the receiving side.

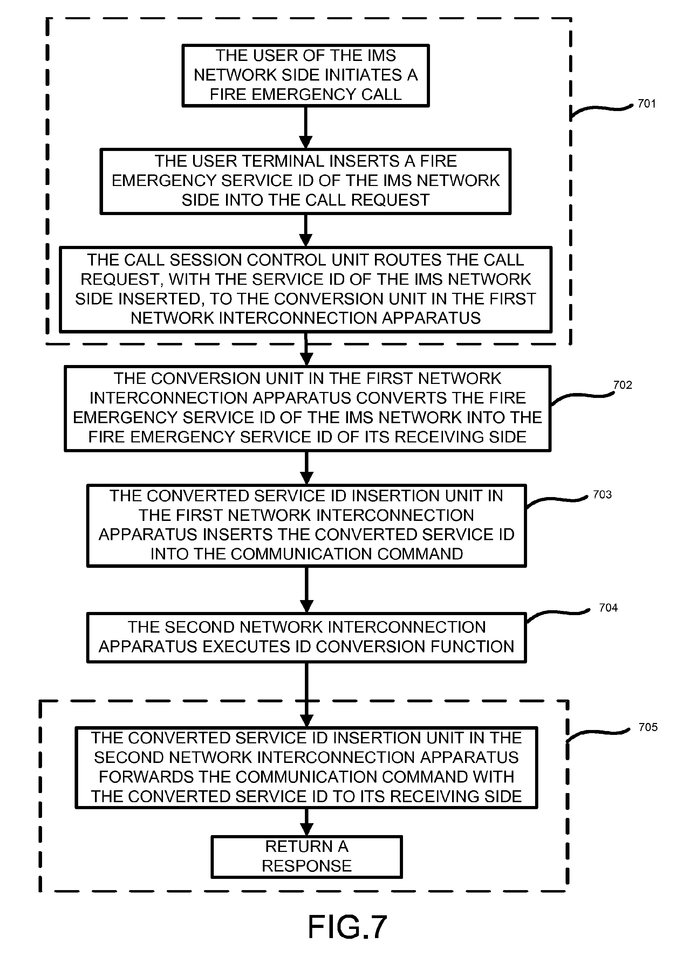

Embodiment 4 still describes a scenario where the communication system includes two network interconnection apparatuses, the IMS network serves as the transmitting side, the traditional circuit network serves as the receiving side, the user in the IMS network initiates a fire alarm call and the Public Safety Access Point (PSAP) is located in the traditional circuit network. What differs from embodiment 3 is that the service ID identified by the second network interconnection apparatus in embodiment 4 is different from that of embodiment 6. As illustrated in Figure 7, in this case, the interconnection of the two sides of the network using two network interconnection apparatuses is described below.

Step 701: When the user of the IMS network side initiates the fire emergency call, the user terminal inserts a fire emergency service ID into the communication command after detecting the fire emergency call. Inserting the fire emergency service ID may be done by inserting URN:sos.fire into the RequestURI header of the SIP INVITE message according to the IETF definition, indicating that an emergency call has been initiated and the emergency type is fire alarm.

The user terminal transmits the fire emergency call, with a fire emergency service ID inserted, to the call session control unit. The call session control unit determines that the emergency call needs to be handled by the PSAP in the traditional circuit network according to the address information of the called party in the request message. Then, the call session control unit routes the fire emergency communication command to a receiving unit in the first network interconnection apparatus and subsequently forwards the fire emergency communication command to the conversion unit.

Step 702: After receiving the fire emergency communication command, the conversion unit in the first network interconnection apparatus converts the fire emergency service ID of the IMS network into the fire emergency service ID of its receiving side. The conversion is done by the conversion unit in the first network interconnection apparatus obtaining the association between the service ID of the IMS network and the service ID of its receiving side from an association storage entity and then finds out the service ID of its receiving side associated with the acquired service ID of the IMS network according to the association.

According to the embodiment, the fire emergency service ID identified by the second network interconnection apparatus is a telephone unified resource identifier (TEL URI), such as, TEL: 119. The conversion unit in the first network interconnection apparatus converts the emergency service ID URN:sos.fire in the emergency call request into the emergency service ID of the receiving side, TEL:119.

Step 703: A converted service ID insertion unit in the first network interconnection apparatus inserts the converted service ID into the communication command.

The insertion is done by inserting an emergency service ID TEL: 119 into the RequestURI of the SIP INVITE message, and then the transmitting unit forwards the communication command with the converted service ID inserted, to the second network interconnection apparatus.

Step 704: The second network interconnection apparatus executes ID conversion function.

The second network interconnection apparatus converts the emergency service ID "TEL: 119" inserted in the RequestURI of the SIP INVITE message into an emergency service ID of the traditional circuit network. According to the embodiment, the fire emergency service ID is telephone number 119 for the Chinese traditional circuit network. A conversion unit in the second network interconnection apparatus obtains an association between the "TEL: 119" and the service ID of the traditional circuit network, finds out the service ID 119 of the receiving side, and inserts the 119 into the called user ID regarding the SS7 signaling. Then, the transmitting unit forwards the communication command with the converted service ID to the PSAP in the traditional circuit network.

The second network interconnection apparatus may also adopt other solutions to implement the service ID conversion.

Step 705: When the PSAP receives the above communication command, it identifies that this is an emergency call with the type of fire alarm, and then handles the emergency call accordingly. Meanwhile, a response message has to be returned to the user of the transmitting side so as to implement the interconnection between the IMS network of the transmitting side and the traditional circuit network of the receiving side.

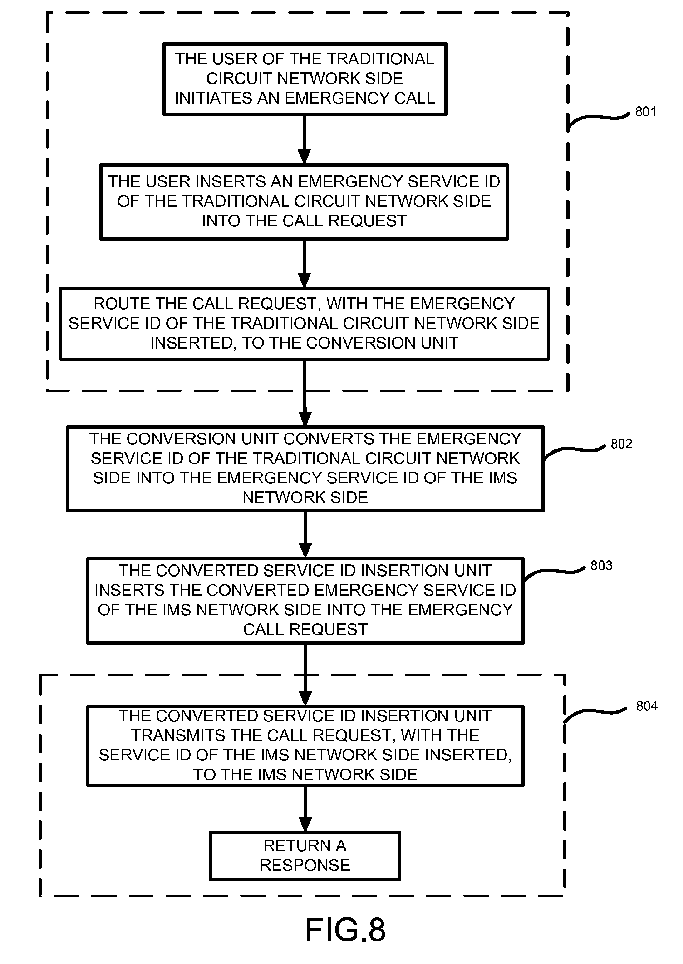

As illustrated in Figure 8, embodiment 5 describes a scenario where the communication system includes only one network interconnection apparatus, the traditional circuit network serves as the transmitting side, the IMS network serves as the receiving side, the user in the traditional circuit network initiates an emergency call, and the PSAP is located in the IMS network. In this case, the interconnection of the two sides of the network is described below.

Step 801: The user of the traditional circuit network side initiates an emergency call and inserts an emergency service ID into the called user ID regarding the SS7 signaling. For instance, the unified emergency service number is 112, representing the initiation of the emergency call.

The traditional circuit network determines that the emergency call needs to be handled by the PSAP in the IMS network by virtue of the address information of the called party in the request message, and subsequently routes the foregoing communication command with the inserted emergency service ID to the receiving unit 31, and then transmits the command to the conversion unit 32.

Step 802: After receiving the emergency communication command, the conversion unit 32 converts the emergency service ID of the traditional circuit network into the emergency service ID of the IMS network. The conversion unit 32 finds out, in the association storage unit 21, the service ID of the IMS network, i.e., URN:202, associated with the obtained service ID 112 of the traditional circuit network. In this way, the conversion of the service ID of the transmitting side and the receiving side is completed.

Step 803: The converted service ID insertion unit 33 inserts the converted service ID into the communication command.

The way that the converted service ID insertion unit 33 inserts the converted service ID into the communication command is described below. The URN:sos is inserted into the RequestURI header of the SIP INVITE message. The transmitting unit 34 forwards the communication command to the call session control unit which handles the emergency service.

Step 804: After receiving the emergency communication command, the call session control unit routes the request to the PSAP in the IMS network. After receiving the foregoing communication command, the PSAP identifies that this is an emergency call and subsequently handles the emergency call accordingly. Meanwhile, a response message has to be returned to the user of the transmitting side so as to implement the interconnection between the traditional circuit network of the transmitting side and the IMS network of the receiving side.

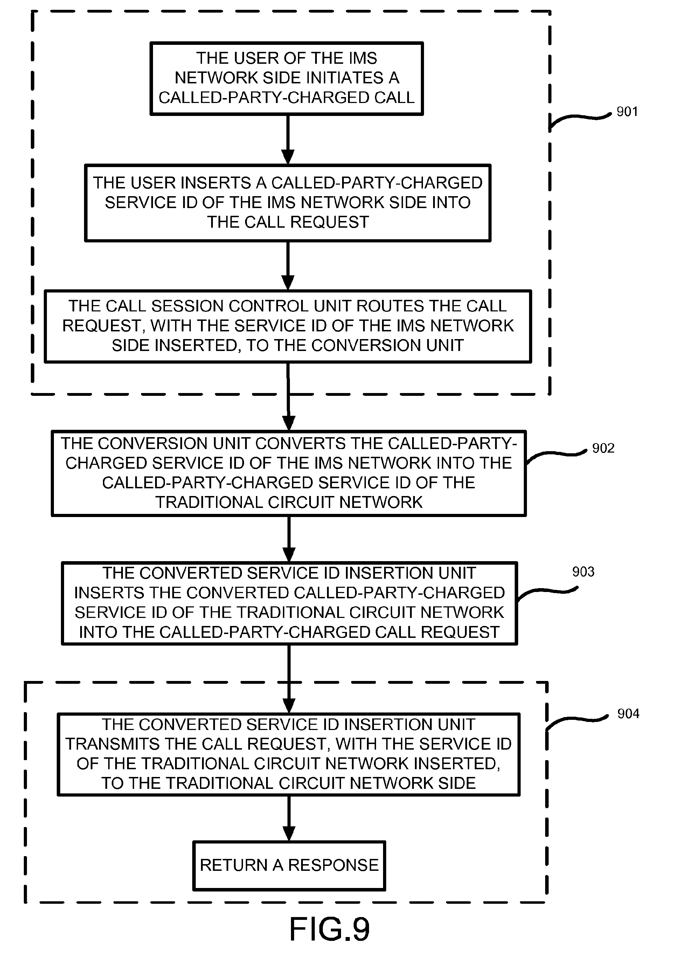

As illustrated in Figure 9, embodiment 6 describes a scenario where the communication system includes only one network interconnection apparatus, the IMS network serves as the transmitting side and the traditional circuit network serves as the receiving side, the user in the IMS network initiates a called-party-charged service, and the called party is located in the traditional circuit network. In this case, the interconnection of the two sides of the network is described below.

Step 901: At the IMS network side, the user initiates a called-party-charged communication command, such as a call to a service center of the company which uses the called-party-charged service. The user inserts a called-party-charged identifier, for instance, inserts a header P-Called-Charged:true abc@abc.com in the SIP INVITE communication command message, to indicate the initiation of the called-party-charged service for a certain telephone number.

The user terminal transmits the communication command, with a called-party-charged service ID inserted, to the call session control unit. The call session control unit determines that the call needs to be handled by the traditional circuit network according to the address information of the called party in the request message, and subsequently routes the called-party-charged communication command to the receiving unit 31 which subsequently forwards the command to the conversion unit 32.

Step 902: After receiving the called-party-charged communication command, the conversion unit 32 converts the called-party-charged service ID of the IMS network into the called-party-charged service ID of the traditional circuit network. The conversion unit 32 finds out, in the association storage unit 21, the service ID of the traditional circuit network which is 800-12345678, according to the service ID P-Called-Charged:true-abc@abc.com of the IMS network. In this way, the conversion of the service ID of the transmitting side and the receiving side is done.

Step 903: The converted service ID insertion unit 33 inserts the converted service ID into the communication command.

The way that the converted service ID insertion unit 33 inserts the converted service ID into the communication command is described below. A service ID 800-12345678 is inserted in the called user ID regarding the SS7 signaling, and then the transmitting unit 34 forwards the communication command to the traditional circuit network.

Step 904: After the traditional circuit network receives the foregoing communication command, it identifies that this is a called-party-charged service, subsequently forwards the communication command to the service center of the company, and carries out the called-party-charged service according to the called-party-charged ID. Meanwhile, a response message has to be returned to the user of the transmitting side so as to implement the interconnection between the IMS network of the transmitting side and the traditional circuit network of the receiving side.

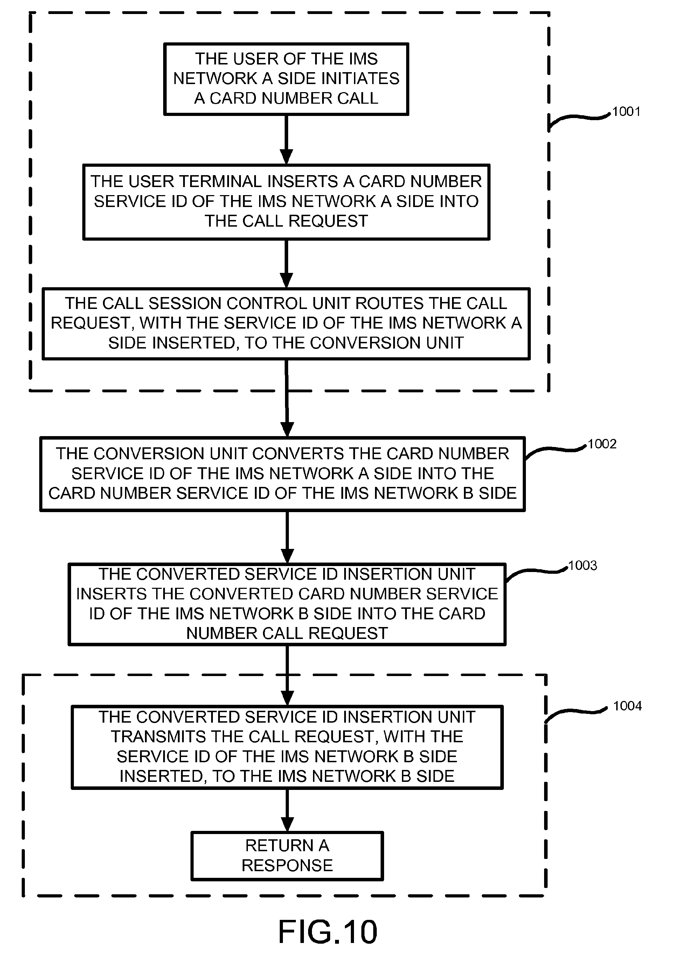

As illustrated in Figure 10, embodiment 7 describes a scenario where the communication system includes only one network interconnection apparatus, with an IMS network A being the transmitting side and an IMS network B being the receiving side. The user in the IMS network A initiates a card number service. The called party is located in the IMS network B provided by another operator. The IMS network A and the IMS network B utilize different card number service IDs. In this case, the interconnection between the two sides of the network is described below.

Step 1001: At the IMS network A side, the user initiates a communication command for card number service. After the user terminal detects this communication command, the user terminal inserts the card number service ID TEL:201 and the subsequent card number as well as the password into the RequestURI header of the SIP INVITE message, indicating that this is a card number service.

The user terminal transmits the communication command, with a card number service ID inserted, to the call session control unit. The call session control unit determines that the call needs to be handled by the IMS network B provided by another operator by virtue of the address information of the called party in the request message, and subsequently routes the communication command to the receiving unit 31 and forwards the command to the conversion unit 32.

Step 1002: After receiving the communication command for the card number service, the conversion unit 32 converts the card number service ID TEL:201 of the IMS network A into the card number service ID TEL:202 of the IMS network B. The conversion unit 32 finds out, in the association storage unit 21, the service ID of the IMS network B, i.e., TEL:202, associated with the obtained service ID of the IMS network A, i.e., TEL:201. In this way, the conversion of the service ID of the transmitting side and the receiving side is completed.

Step 1003: The converted service ID insertion unit 33 inserts the converted service ID into the communication command.

The way that the converted service ID insertion unit 33 inserts the converted service ID into the communication command is described below. The card number service ID TEL:202 is inserted in the RequestURI header of the SIP INVITE message and the transmitting unit 34 then forwards the communication command with the inserted TEL:202 to the IMS network B.

Step 1004: After receiving the foregoing communication command, the IMS network B identifies that this is a card number service according to the service ID and subsequently carries out the card number service. Meanwhile, a response message has to be returned to the user of the transmitting side so as to implement the interconnection between the IMS network A of the transmitting side and the IMS network B of the receiving side.

The network interconnection is implemented by converting the service IDs of the two sides of the network according to the embodiments of the present invention. Accordingly, the problem of the incompatibility of the service IDs of two sides of the network as a result of the different signaling protocols supported by different networks and/or the problem of the incompatibility of the IDs defined by different operators can be solved. For the communication service with respect to service IDs, such as call service, subscription/notification service, message service, etc., the present invention is able to accomplish the functionality of interconnection between services. Users may have a unified service experience in different networks. The continuity and consistency of the service are enhanced so that the user satisfaction is improved. In addition, with respect to the networks, according to the embodiments of the present invention, the IMS network may better heritage the services of the traditional circuit network and paves the way for the evolution from the traditional circuit network to the IMS network.

Apparently, various modifications and variations may be made by those skilled in the art without departing from the spirit and scope of the present invention. Accordingly, the present invention is intended to cover these modifications and variations if these modification and variation according to the present invention fall within the scope of the claims of the present invention and equivalent thereof.

## Claims

1. An apparatus for interconnecting different networks, the apparatus being used between a transmitting side and a receiving side, **characterized in** comprising:
a service ID conversion unit, configured to receive a communication command transmitted from the transmitting side, obtain a service ID of the receiving side associated with a service ID of the transmitting side according to association between the service ID of the transmitting side and the service ID of the receiving side wherein the communication command transmitted from the transmitting side comprises the service ID of the transmitting side, and the service ID conversion unit further configured to transmit the communication command containing the service ID of the receiving side to the receiving side.

2. The apparatus of claim 1, **characterized in that,** the service ID conversion unit comprises:
a receiving unit, configured to receive the communication command transmitted from the transmitting side;
a conversion unit, configured to look up the association between the service ID of the transmitting side and the service ID of the receiving side to find out the service ID of the receiving side associated with the service ID of the transmitting side contained in the communication command;
a converted service ID insertion unit, configured to insert the service ID of the receiving side into the communication command; and
a transmitting unit, configured to transmit the communication command containing the service ID of receiving side to the receiving side.

3. The apparatus of claim 1, **characterized in** further comprising:
an association storage unit, configured to store the association between the service ID of the call transmitting side and the service ID of the call receiving side, and provide the service ID conversion unit with the association between the service ID of the call transmitting side and the service ID of the call receiving side.

4. The apparatus of claim 1, **characterized in that,** the service ID conversion unit is coupled to an external network node that stores the association between the service ID of the call transmitting side and the service ID of the call receiving side.

5. The apparatus of claim 3, **characterized in that,** the association storage unit comprises a plurality of storage entities.

6. The apparatus of claim 1, **characterized in that,**
when the transmitting side is an IP multimedia subsystem network, the receiving side is an IP multimedia subsystem network, or an heterogeneous network, or an interconnection apparatus for an external network;
when the transmitting side is a heterogeneous network, the receiving side is an IP multimedia subsystem network or a heterogeneous network or an interconnection apparatus for an external network; and
when the transmitting side is an interconnection apparatus for an external network, the receiving side is an IP multimedia subsystem network or a heterogeneous network or an interconnection apparatus for an external network.

7. The apparatus of claim 6, **characterized in that,** the heterogeneous network is a traditional circuit network or an IP-based multimedia network excluding the IP multimedia subsystem.

8. The apparatus of claim 7, **characterized in that,**
when the transmitting side is the IP multimedia subsystem, the network and the receiving unit are coupled by a session initiation protocol;
when the transmitting side is the traditional circuit network, the network and the receiving unit are coupled by a traditional inter-office signaling in circuit domain; and
when the transmitting side is the IP-based multimedia network, the network and the receiving unit are coupled by a session initiation protocol, or audio-visual and multimedia protocol, rather than the IP multimedia subsystem.

9. The apparatus of claim 7, **characterized in that,**
when the receiving side is an IP multimedia subsystem, the network and the transmitting unit are coupled by a session initiation protocol;
when the receiving side is a traditional circuit network, the network and the transmitting unit are coupled by a traditional circuit domain interoffice signaling; and
when the receiving side is the IP-based multimedia network, the network and the transmitting unit are coupled by a session initiation protocol, or audio-visual and multimedia protocol, rather than the IP multimedia subsystem.

10. The apparatus of claim 1, **characterized in that,** the apparatus is located in a service control unit, a call session control unit, a media gateway control element, an interconnection border control function element, or an interworking function element.

11. The apparatus of claim 1, **characterized in that,** the service ID is one or more of an emergency service ID, a called-party-charged service ID, a card number service ID, a charging notification service ID or a reverse charging service ID.

12. A method for interconnecting different networks, **characterized in** comprising:
receiving, by a first network side, a communication command containing a service ID of the first network side;
finding out a service ID of a second network side associated with the service ID of the first network side according to association between the service ID of the first network side and a second service ID of a second network side; and
transmitting the communication command containing the service ID of the second network side to the second network side.

13. The method of claim 12, **characterized in that,**
when the first network side is an IP multimedia subsystem network, the second network side is an IP multimedia subsystem network, or an heterogeneous network, or an interconnection apparatus for an external network;
when the first network side is a heterogeneous network, the second network side is an IP multimedia subsystem network or a heterogeneous network or an interconnection apparatus for an external network; and
when the first network side is other network interconnection apparatus, the second network side is an IP multimedia subsystem network or a heterogeneous network or an interconnection apparatus for an external network.

14. The method of claim 13, **characterized in that,** the heterogeneous network is a traditional circuit network or an IP-based multimedia network excluding the IP multimedia subsystem.

15. The method of claim 12, **characterized in that,** the service ID is one or more of an emergency service ID, a called-party-charged service ID, a card number service ID, a charging notification service ID or a reverse charging service ID.

16. A communication system comprising a first network side and a second network side, **characterized in that,** the system further comprises one or more network interconnection apparatuses wherein the first network side is coupled to the second network side via one or more network interconnection apparatuses,
wherein each network interconnection apparatus is configured to receive a communication command from a previous node apparatus, convert an service ID of the transmitting side in the communication command to a service ID of the receiving side according to an acquired association between the service ID of the transmitting side and the service ID of the receiving side, and transmit the communication command with the converted service ID to a next network interconnection apparatus coupled to the network interconnection apparatus, wherein the process continues until the communication command is transmitted to the second network side.

17. The system of claim 16, **characterized in that,** the network interconnection apparatus comprises:
an association storage unit, configured to store the association between the service ID of the transmitting side and the service ID of the receiving side and configured to provide a service ID conversion unit with the association between the service ID of the transmitting side and the service ID of the receiving side;
a service ID conversion unit, configured to receive the communication command transmitted from the transmitting side, obtain the service ID of the receiving side associated with the service ID of the transmitting side contained in the communication command, insert the service ID of the receiving side into the communication command, and transmit the communication command to the receiving side.

18. The system of claim 17, **characterized in that,** the service ID conversion unit comprises:
a receiving unit, configured to receive the communication command transmitted from transmitting side which contains the service ID of the transmitting side;
a conversion unit, configured to look up the association between the service ID of the transmitting side and the service ID of the receiving side to find out the service ID of the receiving side corresponding to the service ID of the transmitting side contained in the communication command;
a converted service ID insertion unit, configured to insert the service ID of the receiving side into the communication command; and
a transmitting unit, configured to transmit the communication command containing the service ID of receiving side to the receiving side.

19. The system of claim 17, **characterized in that,** the association storage unit comprises a plurality of storage entities and the storage entity is a network node entity, a network server entity, a network hard disc or a network driver.

20. The system of claim 16, **characterized in that,** the network interconnection apparatus is located in a service control unit, a call session control unit, a media gateway control element, an interconnection border control function element, or an interworking function element.

21. The system of claim 16, **characterized in that,** when the first network side is an IP multimedia subsystem network, the second network side is an IP multimedia subsystem network or a heterogeneous network; when the first network side is a heterogeneous network, the second network side is an IP multimedia subsystem network or a heterogeneous network.

22. The system of claim 21, **characterized in that,** the heterogeneous network is a traditional circuit network or an IP-based multimedia network excluding the IP multimedia subsystem.
